# EUROPÄISCHE PATENTANMELDUNG

(11) **EP 1 878 527 A1**
(43) Veröffentlichungstag der Anmeldung: **16.01.2008**
(21) Anmeldenummer: 06021440.0
(22) Anmeldetag: 12.10.2006
(51) Int. Cl.: B23K 1/008, H05K 3/34, B23K 1/00, B23K 3/04

(54) **Lötverfahren und -vorrichtung zum Reflow-Löten mit zwei unterschiedlichen Gasen**

(30) Priorität: 10.07.2006 DE 102006032057; 29.09.2006 DE 102006046476
(71) Anmelder: Linde Aktiengesellschaft, 65189 Wiesbaden (DE)
(72) Erfinder: Wandke, Ernst, Dr., 82538 Geretsried (DE)

(57) **Zusammenfassung**

Die Erfindung betrifft ein Verfahren zum Reflow-Löten von Werkstücken (1), wobei das der Lötbehandlung zu unterziehende Werkstück (1) entlang einer bestimmten Bahn durch eine äußere Einhausung (9) transportiert wird, die eine Lötzone (5) mit einer Heizvorrichtung (4) und mindestens eine weitere Zone (7,8) umgibt, und wobei in die äußere Einhausung (9) ein Schutz- und/oder Aktivgas einer ersten Zusammensetzung eingebracht wird und das Werkstück (1) zumindest in der Lötzone (5) mit Hilfe der Heizvorrichtung (4) erwärmt wird, wobei die Lötzone (5) zusätzlich von einer inneren Einhausung (12) umgeben wird, in die ein Schutz- und/oder Aktivgas einer zweiten Zusammensetzung eingebracht wird. Desweiteren betrifft die Erfindung eine Vorrichtung zur Durchführung des Verfahrens.

## Beschreibung

Die vorliegende Erfindung betrifft ein Verfahren zum Reflow-Löten von Werkstücken, wobei das der Lötbehandlung zu unterziehende Werkstück entlang einer bestimmten Bahn durch eine äußere Einhausung transportiert wird, die eine Lötzone mit einer Heizvorrichtung und mindestens eine weitere Zone umgibt, und wobei in die äußere Einhausung ein Schutz- und/oder Aktivgas einer ersten Zusammensetzung eingebracht wird und das Werkstück zumindest in der Lötzone mit Hilfe der Heizvorrichtung erwärmt wird. Desweiteren betrifft die Erfindung eine Vorrichtung zum Reflow-Löten von Werkstücken mit einer Transportvorrichtung für das der Lötbehandlung zu unterziehende Werkstück und einer äußeren Einhausung, die die Transportvorrichtung, eine Lötzone mit einer Heizvorrichtung und mindestens eine weitere Zone umgibt, sowie einer Eintragsvorrichtung zum Eintrag von Schutz- und/oder Aktivgas einer ersten Zusammensetzung in das Innere der äußeren Einhausung.

Das Reflow-Löten stellt eine bekannte Technologie dar, bei der als wesentliches Element eine bereits auf das zu lötende Bauteil aufgebrachte Lotpaste durch Erwärmen wieder verflüssigt wird und dadurch die gewünschten Kontakte hergestellt werden. Diese Vorgehensweise ist insbesondere zum Simultanlöten von elektrischen Bauelementen auf Leiterplatten oder von verschiedenen elektrischen und/oder mechanischen Bauteilen unterschiedlichster Funktion und Größe geeignet. Die Lotpaste wird bei den bekannten Reflow-Lötverfahren in der Regel auf die zu lötenden Leiterplatten oder Bauteile aufgedruckt. Im Folgenden werden die zu lötenden Leiterplatten oder Bauteile ganz allgemein als Werkstücke bezeichnet.

Das Reflow-Löten erfolgt derzeit in zunehmendem Maße unter Schutzgas, z.B. in einer Stickstoffatmosphäre. Das Löten unter Schutzgasatmosphäre weist bekanntermaßen viele Vorteile auf. Es seien hier nur einige wenige genannt. Beipielsweise ermöglicht die Schutzgasatmosphäre für das Reflow-Löten den Einsatz von Lotpaste mit einem verminderten Flussmittelgehalt. Die Schutzgasatmosphäre, die in der Regel inert ist und so einen weitgehenden Ausschluß von Sauerstoff aus der den Lötvorgang umgebenden Atmosphäre zu Folge hat, verhindert oxidative Vorgänge. Dies dient vor allem der Qualitätsverbesserung, der Minderung des Wartungsaufwandes und der Verbesserung des Umweltschutzes, z.B. durch den Einsatz umweltfreundlicher Lotpasten. Der Einsatz von Schutzgas ermöglicht darüberhinaus Einsparungen bei der Nachreinigungsstufe und eine Verminderung der erforderlichen Prozesszeit.

Die beschriebenen herkömmlichen Vorgehensweisen und Anlagen stoßen jedoch mittlerweile an ihre Grenzen, vor allem im Hinblick auf die immer weiter verbreitetete Ultra-fine-pitch-Technik. Die sehr geringen Pitch-Abstände erfordern Verbesserungen bei der Verfahrens- und Anlagentechnik, die eine Erweiterung des Prozessfensters insbesondere in Richtung zu geringsten Pad-Abständen hin zuläßt.

Aufgabe der vorliegenden Erfindung ist es daher, ein verbessertes Verfahren und einer verbesserte Vorrichtung zum Reflow-Löten zur Verfügung zustellen, mit deren Hilfe eine bessere Lötqualität erreicht wird.

Die gestellte Aufgabe wird verfahrensseitig dadurch gelöst, dass die Lötzone zusätzlich von einer inneren Einhausung umgeben wird, in die ein Schutz- und/oder Aktivgas einer zweiten Zusammensetzung eingebracht wird. Durch diese Ausgestaltung wird eine Lötzone mit einer eigenen Schutzgasatmosphäre geschaffen, wobei die Schutzgasatmosphäre der Lötzone (zweite Schutzgasatmosphäre) vorteilhaft nicht direkt an die Umgebungsluft angrenzt, sondern lediglich in Kontakt mit der ersten Schutzgasatmosphäre kommt. Die Möglichkeit in den einzelnen Zonen Schutz- und/oder Aktivgasatmosphären mit unterschiedlicher Zusammensetzung zu verwenden, hat sich als sehr vorteilhaft herausgestellt. Der Einsatz einer bestimmten Zusammensetzung kann im Hin blick auf die Ausnutzung der Schutz- und/oder Aktivgaswirkung auf das Werkstück im Hinblick auf die gewünschte Lötqualität oder im Hinblick auf andere Gesichtspunkte optimiert werden. Beispielsweise kann die Vorwärmung des Werkstücks mit einer anders zusammengesetzten Schutzgasatmosphäre durchgeführt werden als der eigentliche Lötvorgang, wobei in diesem Fall die weitere Zone als Vorwärmzone ausgebildet und genutzt wird.

Bevorzugt passiert das Werkstück vor dem Lötvorgang eine weitere Zone, in der das Werkstück vorgewärmt wird. Gemäß einer weiteren bevorzugten Ausgestaltung der Erfindung passiert das Werkstück nach dem Lötvorgang eine weitere Zone, in der das Werkstück abgekühlt wird. Die weitere Zone kann also beispielsweise der Vorwärmung des Werkstücks dienen. Desweiteren kann noch eine weitere Zone der Abkühlung des Werkstücks nach erfolgtem Lötvorgang dienen. Häufig wird jedoch auch ein separater Abkühlbereich nachgeschaltet. Das erfindungsgemäße Verfahren ermöglicht in den einzelnen Zonen Schutz- und/oder Aktivgasatmosphären mit unterschiedlicher Zusammensetzung zu verwenden und so das Verfahren auf die unterschiedlichen Anforderungen in der Vorwärm-, der Löt- und der Abkühlzone abzustimmen. Der Stickstoffverbrauch in der Lötzone kann damit z.B. vorteilhaft rein nach der gewünschten Lötqualität ermittelt werden. Auf einen Kompromiss mit den Erfordernissen der anderen Zonen kann damit verzichtet werden. Ebenso können die Zusammensetzungen der Schutz- und/oder Aktivgasatmosphären der anderen Zonen gemäß den dortigen Erfordernissen optimiert werden.

Gemäß einer besonders vorteilhaften Weiterbildung der Erfindung werden eine oder mehrere der weiteren Zonen und deren Schutz- und/oder Aktivgasatmosphären jeweils mit Hilfe einer eigenen inneren Einhausung abgeschirmt, wodurch die Zusammensetzung der in den einzelnen Zonen erwünschten Schutz- und/oder Aktivgasatmosphären noch genauer auf gewünschte Werte eingestellt und konstant gehalten werden können. Dabei können diese weiteren Zonen jeweils mit einer eigenen getrennt zuzuführenden Schutz- und/oder Aktivgasatmosphäre ausgestattet werden.

Bevorzugt werden als Schutz- und/oder Aktivgasatmosphären Inertgase oder Inertgasgemische eingesetzt, insbesondere Stickstoff oder stickstoffhaltige Inertgasgemische. Die Vorteile des Inertgaseinsatzes wurden bereits eingangs erläutert.

Die Schutz- und/oder Aktivgasatmosphäre wird im Folgenden der Einfachheit und Kürze wegen nur noch Schutzgasatmosphäre genannt. Es sei jedoch an dieser Stelle ausdrücklich darauf hingewiesen, dass immer auch Aktivgas von dem Begriff umfasst wird.

Gemäß einer vorteilhaften Weiterbildung der Erfindung wird eine Schutzgasatmosphäre der zweiten Zusammensetzung eingesetzt, die toxische und/oder brennbare Gase enthält, insbesondere Wasserstoff. Insbesondere beim Einsatz von Wasserstoff ist es hier von Vorteil, dass zwei Schutzgasatmosphären unterschiedlicher Zusammensetzung Verwendung finden. Dadurch kann der Wasserstoffgehalt in der zweiten Schutzgasatmosphäre z.B. höher gewählt werden, ohne dass in der restlichen Prozesszone, z.B. im Vorwärmbereich, der kritische Wert für die dort zulässige Wasserstoffkonzentration überschritten wird. Für Wasserstoff liegt dieser Wert in der Regel bei kleiner oder gleich 5% Wasserstoffanteil in der Schutzgasatmosphäre für die Schutzgasatmosphäre der ersten Zusammensetzung.

Der vorstehend beschriebene Vorteil ergibt sich, da die innere Einhausung von der Schutzgasatmosphäre der ersten Zusammensetzung umgeben ist und dadurch eine Pufferwirkung gegenüber dem Sauerstoff aus der Umgebungsluft besteht.

Mit besonderem Vorteil wird eine Schutzgasatmosphäre der zweiten Zusammensetzung eingesetzt, die mit flüssigem und/oder gasförmigem Flussmittel dotiert ist. Durch die erfindungsgemäße Trennung der Schutzgasatmosphären wird für diese vorteilhafte Ausgestaltung ein wesentlich reduzierter Verbrauch an Flussmittel durch den Einsatz einer Lotpaste mit einem reduzierten Flussmittelgehalt ermöglicht. Auch ist es damit für bestimmte Anwendungen möglich, eine flussmittelfreie Lotpaste einzusetzen.

Gemäß einer vorteilhaften Weiterbildung der Erfindung wird die Schutz- und/oder Aktivgasatmosphäre der zweiten Zusammensetzung dazu benutzt, eine Schutz- und/oder Aktivgasatmosphäre der ersten Zusammensetzung aufzubauen. Dabei kann auf einen separaten Eintrag der Schutzgasatmosphäre der ersten Zusammensetzung verzichtet werden, da diese hier lediglich durch ein Ausströmen von Schutzgas aus der inneren Einhausung in den Bereich zwischen innerer und äußerer Einhausung aufgebaut wird.

Bevorzugt werden die Zusammensetzungen der Schutzgasatmosphären gesteuert und/oder geregelt. Besonders bevorzugt wird die Zusammensetzung jeder einzelnen Schutzgasatmosphäre einzeln eingestellt und/oder geregelt. Mit besonderem Vorteil werden die Zusammensetzungen der Schutzgasatmosphären durch eine übergeordnete Steuer- und/oder Regeleinrichtung, die die einzelnen Zusammensetzungen nach einer vorbestimmten Beziehung zueinander aufeinander abstimmt, eingestellt und/oder geregelt.

Vorrichtungsseitig wird die gestellte Aufgabe dadurch gelöst, dass für die Lötzone zusätzlich eine innere Einhausung und eine Eintragsvorrichtung für Schutz- und/oder Aktivgas einer zweiten Zusammensetzung vorgesehen ist.

Die Begrenzungswände der inneren Einhausung und die der äußeren Einhausung können dabei durchaus zum Teil zusammenfallen. Das heißt, eine Wand der inneren Einhausung kann mit einer Wand der äußeren Einhausung identisch sein oder einen Teil einer Wand der äußeren Einhausung bilden.

Gemäß einer besonders vorteilhaften Ausgestaltung der vorliegenden Erfindung ist die weitere Zone als Vorwärmzone für das Werkstück ausgebildet und der Lötzone vorgeschaltet.

Gemäß einer Weiterbildung der Erfindung ist die weitere Zone als Kühlzone für das Werkstück ausgebildet und der Lötzone nachgeschaltet.

Gemäß einer besonders vorteilhaften Weiterbildung der Erfindung weist eine oder mehrere der weiteren Zonen jeweils eine eigene innere Einhausung auf, die zur Einhausung und Trennung der jeweiligen Schutz- und/oder Aktivgasatmosphäre der jeweiligen Zone vorgesehen ist. Damit kann jede Zone mit einer für sie optimalen Schutzgasatmosphäre ausgestattet werden.

Die äußere Einhausung ist zweckmäßigerweise so gestaltet, dass möglichst kein oder wenig Austausch mit der Umgebungsluft stattfinden kann. Sowohl die äußere als auch die innere Einhausung umfassen Elemente, die oberhalb und unterhalb der Transportvorrichtung liegen bzw. diese komplett umschließen, wodurch sich jeweils eine Minimierung des einzuhausenden Volumens und damit auch eine Minimierung des Schutzgasbedarfs ergibt.

Bevorzugt sind Mittel zum Steuern und/oder Regeln der Zusammensetzungen der Schutzgasatmosphären vorgesehen. Dadurch ergeben sich sehr vorteilhaft getrennt einstell- und/oder regelbare Schutzgasatmosphären in den Bereichen der ersten und der zweiten Schutzgaszusammensetzung.

Besonders bevorzugt ist demnach je eine Einrichtung zum Steuern und/oder Regeln der Zusammensetzung der einzelnen Schutzgasatmosphäre vorgesehen, wobei jede einzeln einstell- und/oder regelbar ist.

Darüberhinaus ist mit besonderem Vorteil eine übergeordnete Steuer- und/oder Regeleinrichtung zum Einstellen und/oder Regeln der Zusammensetzungen der Schutzgasatmosphären vorgesehen, die die einzelnen Zusammensetzungen nach einer vorbestimmten Beziehung zueinander aufeinander abstimmt.

Zweckmäßigerweise sind die Eintragsvorrichtungen zum Eintrag einer ersten und/oder zweiten Schutzgasatmosphäre als Gasdiffusoren ausgebildet.

In einer besonders vorteilhaften Ausgestaltung sind die Gasdiffusoren als perforierte Rohre ausgebildet. Die Eintragsvorrichtungen für die Schutzgasatmosphäre können beispielsweise auch vorteilhaft als Injektoren oder Lanzen ausgebildet sein. Insbesondere die Eintragsvorrichtungen für die Schutzgasatmosphäre der ersten Zusammensetzung können vorteilhaft als drehbare Lanzen ausgeführt sein, mit deren Hilfe eine gezielte Beeinflussung der Strömungsrichtung der ersten Schutzgasatmosphäre ermöglicht wird.

Gemäß einer vorteilhaften Weiterbildung der Erfindung sind also die Gasdiffusoren drehbar ausgebildet, sodass die Strömungsrichtungen der Schutz- und/oder Aktivgasatmosphären der ersten und/oder zweiten Zusammensetzung gezielt beeinflussbar sind.

Gemäß einer alternativen Ausgestaltung können jedoch die Eintragsvorrichtungen für die Schutzgasatmosphäre einer ersten Zusammensetzung auch lediglich durch das Einströmen des aus der zweiten Schutzgasatmosphäre austretenden Gasüberschusses verwirklicht sein. Dabei bildet dann die Schutzgasatmosphäre der ersten Zusammensetzung eine Art Pufferzone zur Umgebung deren Zusammensetzung sich von der Umgebung und in der Regel von der Zusammensetzung der zweiten Schutzgasatmosphäre unterscheidet.

Zusammenfassend seien im Folgenden einige der vielfältigen Vorteile der vorliegenden Erfindung dargestellt:

Die Erfindung ermöglicht eine bessere Ausnutzung des Inertgases, eine bessere Stabilisierung der Zusammensetzung der Schutzgasatmosphäre, besonders in der Lötzone sowie eine Optimierung der Zusammensetzungen der Schutzgasatmosphären in den einzelnen Prozesszonen, also beispielsweise im Vorwärmbereich, im Lötbereich und/oder in einem Abkühlbereich. Die Vorwärmung der Werkstücke erfolgt also in einer anders zusammengesetzten Schutzgasatmosphäre als das Löten.

Desweiteren ermöglicht die vorliegende Erfindung eine vorteilhafte Optimierung des Inertgasverbrauchs als Funktion der erforderlichen Lötqualität.

Darüberhinaus wurde mit der Erfindung eine vorteilhafte Möglichkeit zum Einsatz brennbarer und/oder toxischer Gase oder Gasgemische, vor allem im Lötbereich gefunden. Es können auch Formiergas, reiner Wasserstoff und/oder gasförmiges Flussmittel problemlos eingesetzt werden.

Die Vorwärmung des Werkstücks und/oder die Aktivierung der Lotpaste kann vorteilhaft bei einer anders zusammengesetzten Schutzgasatmosphäre erfolgen als der eigentliche Lötvorgang.

Die vorliegende Erfindung ermöglicht auch die Dotierung der Schutzgasatmosphäre der zweiten Zusammensetzung mit flüssigem und/oder gasförmigem Flussmittel, ohne dass nennenswerte Mengen aus der Gesamtanlage austreten. Die Schutzgasatmosphäre der ersten Zusammensetzung weist dabei vorteilhaft eine gewisse Pufferwirkung auf. Zusätzlich wird die eigentliche Lötatmosphäre nicht oder lediglich deutlich geringer als bei herkömmlichen Verfahren durch äußere Einflüsse aus der Umgebung der Lötanlage beeinflusst.

Besonders vorteilhaft ist auch die Möglichkeit, einen gewünschten Wert für den Wärmeübergang in den einzelnen Bereichen der Prozesszone über den Anteil bestimmter Gase in der Zusammensetzung der einzelnen Schutzgasatmosphären einzustellen. Dabei wird z.B. der Wärmeübergang zwischen der Heizvorrichtung in der Vorwärm- bzw. in der Lötzone und dem Werkstück beeinflusst. Beispielsweise wird dazu der Anteil an Helium und/oder Wasserstoff und/oder Kohlendioxid in der Schutzgaszusammensetzung benutzt. Durch gezielte Einstellung der Wärmeübergangswerte über die Zusammensetzung der Schutzgasatmosphäre kann z. B. in der Vorwärmzone ein wesentlich verbessertes Aufheizregime verwirklicht werden.

Mit der Erfindung wird eine vor allem für die Verarbeitung von Fine-pitch-Bauteilen fundamental wichtige Optimierung und Vergleichmäßigung des Temperaturprofils mit weniger als +-1°C über die gesamte Leiterplatte ermöglicht.

Die Schutzgasatmosphäre der zweiten Zusammensetzung, also die Schutzgasatmosphäre im Lötbereich ist durch die vorliegende Erfindung unabhängiger von Einflüssen aus der Umgebung der Lötanlage geworden, da die Schutzgasatmosphäre der ersten Zusammensetzung solche Einflüsse abpuffert.

Mit der Erfindung wird vorteilhaft eine optimale Inertgasausnutzung und ein optimales Inertgasregime erreicht. Der Inertgaseinsatz läßt sich nach der gewünschten Lötqualität planen. Es kann z.B. eine höhere Lötqualität bei geringerem Stickstoffeinsatz erzielt werden.

Desweiteren kann allgemein gesprochen die Chemie des Lötvorgangs zielgerichtet verändert werden, womit z.B. eine Veränderung der Lotpastenzusammensetzung, des Oxidationsverhaltens beim Löten und/oder die Oberflächenspannung sowie das Benetzungsverhalten des Lotes gemeint ist.

Die Strömungsrichtung der einzelnen Schutzgasatmosphären kann durch einfache Ausrichtung der Gasdiffusoren beeinflusst werden. Die Situation an den Öffnungen der äußeren Einhausung zum Ein- und Ausbringen der Werkstücke ist vereinfacht, es kann z.T. ohne Schleusen und mit verminderter Absaugleistung für austretendes Schutzgas gearbeitet werden. Auch für den Wartungsaufwand ist eine vorteilhafte Verminderung zu erwarten.

Darüberhinaus ermöglicht die vorliegende Erfindung eine Weiterbildung einer Anlage zum Reflow-Löten, so dass sie die Durchführung von Lötvorgängen in reinem Wasserstoff ermöglicht. Dies wird letztlich durch die doppelte Einhausung der Lötzone in Verbindung mit den Steuermöglichkeiten für die Zusammensetzungen der Schutzgasatmosphären erreicht.

Die Erfindung sowie weitere Ausgestaltungen der Erfindung werden im Folgenden anhand von in den Figuren dargestellten Ausführungsbeispielen näher erläutert. Hierbei zeigt
- Figur 1: eine erfindungsgemäße Reflow-Lötanlage und
- Figur 2: eine alternative Ausführung der erfindungsgemäßen Lötanlage.

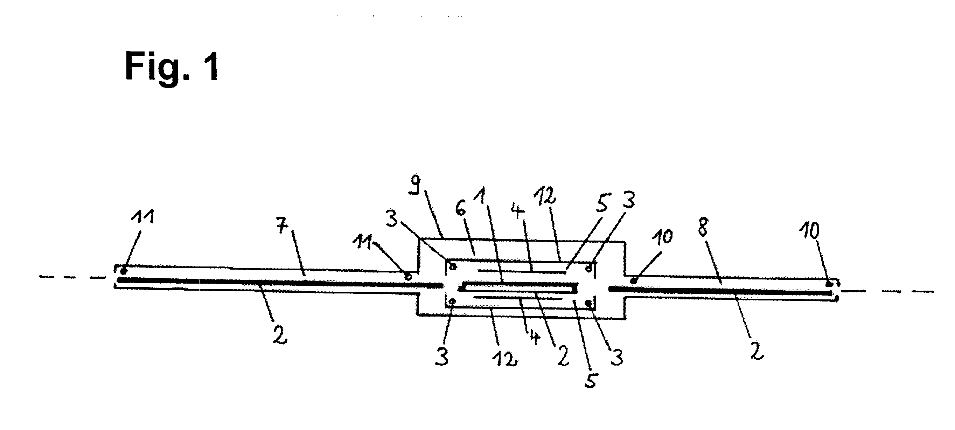

Figur 1 zeigt eine erfindungsgemäße Vorrichtung zum Reflow-Löten. Eine lötfertige Leiterplatte 1 wird zunächst in die Vorwärmzone 7 mittels einer Transportvorrichtung 2 eingefahren. Sowohl die Vorwärmzone 7 als auch die erweiterte Lötzone 6 und die Kühlzone 8 werden von einer äußeren Einhausung 9 umgeben, das die Umgebungsluft weitestgehend abschirmt. Die Vorwärmzone 7 wird bedarfsgerecht über entsprechende Lanzen 11 als Eintragsvorrichtung 11 mit Stickstoff geflutet. Die auf etwa 120 - 140°C in der Vorwärmzone 7 vorgeheizte Leiterplatte 1 erreicht über die Transportvorrichtung 2 den von der inneren Einhausung 12 umgebenen Bereich 5, der eigentlichen Löt- oder sog. Peakzone 5. Über die Lanzen 3 wird in die Lötzone 5 z.B. ein Formiergas bestehend aus 10% Wasserstoff und Stickstoff (Rest) eingeblasen, über die Heizelemente 4 aufgeheizt und über ein optimiertes Strömungsprofil auf der Leiterplatte 1 wirksam. Die Temperatur liegt hier z.B. für bleifreie Produkte bei 320°C, wobei durch den Einsatz des Formiergases die Peaktemperatur um 20°C reduziert werden konnte.

Nach erfolgtem Lötprozess verläßt die Leiterplatte 1 mittels der Transportvorrichtung 2 die erweiterte Lötzone 6 und wird anschließend in der Kühlzone 8 unter Schutzgasatmosphäre auf rund 80°C abgekühlt, wobei das Schutzgas über die Lanzen 10 eingebracht wird. Danach verläßt die Leiterplatte 1 die erfindungsgemäße Vorrichtung zum Reflow-Löten.

Es sei hier nochmal auf die Vorteile hingewiesen, die in diesem Beispiel mit der Erfindung erzielt werden, u.a. sind das die verkürzten Prozesszeiten, eine verringerte Löttemperatur (hier um 20°C verringert), eine bessere Lötqualität sowie ein verminderter Verbrauch an Schutz- und Aktivgas. Desweiteren wird vorteilhaft ein wesentlich erweitertes Prozessfenster und eine erhöhte Flexibilität bei den Prozessparametern erzielt. Dabei kann eine Prozessoptimierung von Werkstück zu Werkstück bzw. von Losgröße zu Losgröße ohne Maschinenstop erfolgen.

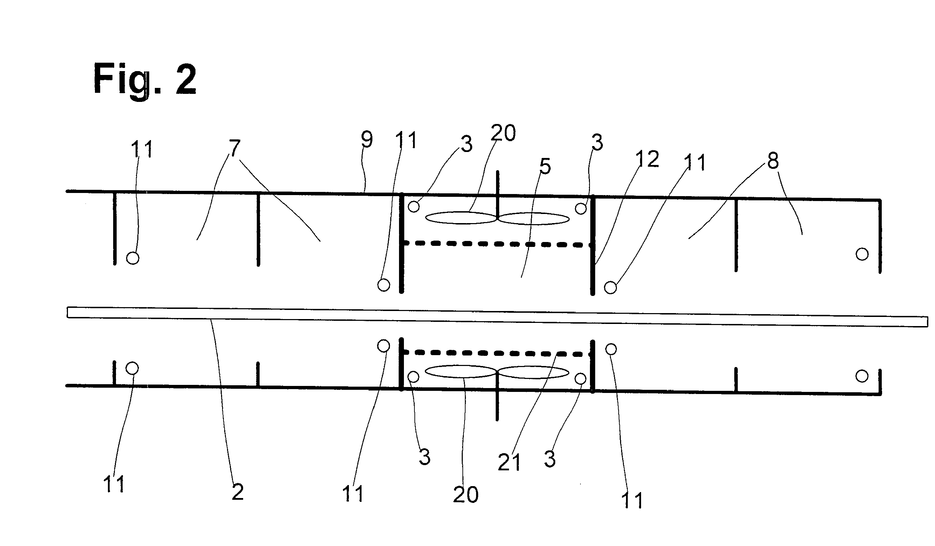

In Figur 2 ist eine andere Ausführungsform der Erfindung dargestellt. In den beiden Figuren beziehen sich gleiche Bezugszeichen auf gleiche Bauteile.

Die Lötanlage nach Figur 2 unterscheidet sich von der gemäß Figur 1 im Wesentlichen darin, dass sich die innere Einhausung 12 bis zur äußeren Einhausung 9 erstreckt. Die Außenwand der inneren Einhausung 12 ist identisch mit einem Teil der Wand der äußeren Einhausung 9.

Die innere Einhausung 12 beherbergt die eigentliche Lötzone 5, der über die Lanzen 3 beispielsweise Wasserstoff zugeführt wird, so dass eine im Wesentlichen nur Wasserstoff enthaltende Lötatmosphäre erzeugt wird. Die Verteilung des Wasserstoff erfolgt über Ventilatoren 20. In der Vorwärmzone 7 sowie der Kühlzone 8 wird dagegen über Lanzen 11 jeweils eine Stickstoffatmosphäre hergestellt.

## Patentansprüche

1. Verfahren zum Reflow-Löten von Werkstücken (1), wobei das der Lötbehandlung zu unterziehende Werkstück (1) entlang einer bestimmten Bahn durch eine äußere Einhausung (9) transportiert wird, die eine Lötzone (5) mit einer Heizvorrichtung (4) und mindestens eine weitere Zone (7, 8) umgibt, und wobei in die äußere Einhausung (9) ein Schutz- und/oder Aktivgas einer ersten Zusammensetzung eingebracht wird und das Werkstück (1) zumindest in der Lötzone (5) mit Hilfe der Heizvorrichtung (4) erwärmt wird, **dadurch gekennzeichnet, dass** die Lötzone (5) zusätzlich von einer inneren Einhausung (12) umgeben wird, in die ein Schutz- und/oder Aktivgas einer zweiten Zusammensetzung eingebracht wird.

2. Verfahren nach Anspruch 2, **dadurch gekennzeichnet, dass** eine oder mehrere der weiteren Zonen (7, 8) und deren Schutz- und/oder Aktivgasatmosphären jeweils mit Hilfe einer eigenen inneren Einhausung abgeschirmt werden.

3. Verfahren nach Anspruch 1 oder 2, **dadurch gekennzeichnet, dass** als Schutz- und/oder Aktivgasatmosphären Inertgase oder Inertgasgemische eingesetzt werden, insbesondere Stickstoff oder stickstoffhaltige Inertgasgemische.

4. Verfahren nach einem der Ansprüche 1 bis 3, **dadurch gekennzeichnet, dass** eine Schutz- und/oder Aktivgasatmosphäre der zweiten Zusammensetzung eingesetzt wird, die toxische und/oder brennbare Gase enthält, insbesondere Wasserstoff.

5. Verfahren nach einem der Ansprüche 1 bis 4, **dadurch gekennzeichnet, dass** eine Schutz- und/oder Aktivgasatmosphäre der zweiten Zusammensetzung eingesetzt wird, die mit flüssigem und/oder gasförmigem Flussmittel dotiert ist.

6. Verfahren nach einem der Ansprüche 1 bis 5, **dadurch gekennzeichnet, dass** die Schutz- und/oder Aktivgasatmosphäre der zweiten Zusammensetzung dazu benutzt wird, eine Schutz- und/oder Aktivgasatmosphäre der ersten Zusammensetzung aufzubauen.

7. Verfahren nach einem der Ansprüche 1 bis 6, **dadurch gekennzeichnet, dass** die Zusammensetzungen der Schutz- und/oder Aktivgasatmosphären gesteuert und/oder geregelt werden.

8. Verfahren nach einem der Ansprüche 1 bis 7, **dadurch gekennzeichnet, dass** die Zusammensetzung jeder einzelnen Schutz- und/oder Aktivgasatmosphäre einzeln eingestellt und/oder geregelt wird.

9. Verfahren nach einem der Ansprüche 1 bis 8, **dadurch gekennzeichnet, dass** die Zusammensetzungen der Schutz- und/oder Aktivgasatmosphären durch eine übergeordnete Steuer- und/oder Regeleinrichtung, die die einzelnen Zusammensetzungen nach einer vorbestimmten Beziehung zueinander aufeinander abstimmt, eingestellt und/oder geregelt werden.

10. Vorrichtung zum Reflow-Löten von Werkstücken (1) mit einer Transportvorrichtung (2) für das der Lötbehandlung zu unterziehende Werkstück (1) und einer äußeren Einhausung (9), die die Transportvorrichtung (2), eine Lötzone (5) mit einer Heizvorrichtung (4) und mindestens eine weitere Zone (7, 8) umgibt, sowie einer Eintragsvorrichtung (10, 11) zum Eintrag von Schutz- und/oder Aktivgas einer ersten Zusammensetzung in das Innere der äußeren Einhausung (9), **dadurch gekennzeichnet, dass** für die Lötzone (5) zusätzlich eine innere Einhausung (12) und eine Eintragsvorrichtung (3) für Schutz- und/oder Aktivgas einer zweiten Zusammensetzung vorgesehen ist.

11. Vorrichtung nach Anspruch 10, **dadurch gekennzeichnet, dass** die weitere Zone (7) als Vorwärmzone (7) für das Werkstück (1) ausgebildet und der Lötzone (5) vorgeschaltet ist.

12. Vorrichtung nach Anspruch 10 oder 11, **dadurch gekennzeichnet, dass** die weitere Zone (8) als Kühlzone (8) für das Werkstück (1) ausgebildet und der Lötzone (5) nachgeschaltet ist.

13. Vorrichtung nach einem der Ansprüche 10 bis 12, **dadurch gekennzeichnet, dass** eine oder mehrere der weiteren Zonen (7, 8) jeweils eine eigene innere Einhausung aufweisen, die zur Einhausung und Trennung der jeweiligen Schutz- und/oder Aktivgasatmosphäre der jeweiligen Zone (7, 8) vorgesehen ist.

14. Vorrichtung nach einem der Ansprüche 10 bis 13, **dadurch gekennzeichnet, dass** die innere Einhausung (12) oberhalb und unterhalb der Bahn des Werkstücks (1) angebracht ist und die Transportvorrichtung (2) nahezu vollständig umschließt.

15. Vorrichtung nach einem der Ansprüche 10 bis 14, **dadurch gekennzeichnet, dass** Mittel zum Steuern und/oder Regeln der Zusammensetzungen der Schutz- und/oder Aktivgasatmosphären vorgesehen sind.

16. Vorrichtung nach einem der Ansprüche 10 bis 15, **dadurch gekennzeichnet, dass** je eine Einrichtung zum Steuern und/oder Regeln der Zusammensetzung der einzelnen Schutz- und/oder Aktivgasatmosphäre vorgesehen ist, wobei jede einzeln einstell- und/oder regelbar ist.

17. Vorrichtung nach einem der Ansprüche 10 bis 16, **dadurch gekennzeichnet, dass** eine übergeordnete Steuer- und/oder Regeleinrichtung zum Einstellen und/oder Regeln der Zusammensetzungen der Schutz- und/oder Aktivgasatmosphären vorgesehen ist, die die einzelnen Zusammensetzungen nach einer vorbestimmten Beziehung zueinander aufeinander abstimmt.

18. Vorrichtung nach einem der Ansprüche 10 bis 17, **dadurch gekennzeichnet, dass** die Eintragsvorrichtungen (3, 10, 11) zum Eintrag einer ersten und/oder zweiten Schutz- und/oder Aktivgasatmosphäre als Gasdiffusoren (3, 10, 11) ausgebildet sind.

19. Vorrichtung nach Anspruch 18, **dadurch gekennzeichnet, dass** die Gasdiffusoren (3, 10, 11) drehbar ausgebildet sind, sodass die Strömungsrichtungen der Schutz- und/oder Aktivgasatmosphären der ersten und/oder zweiten Zusammensetzung gezielt beeinflussbar sind.
